# FASCICULE DE BREVET EUROPEEN

(11) **EP 2 736 223 B1**
(45) Date de publication et mention de la délivrance du brevet: **06.02.2019**
(21) Numéro de dépôt: 13194148.6
(22) Date de dépôt: 22.11.2013
(51) Int. Cl.: H04L 29/08, G06F 17/30, B64C 19/00, G07C 5/00, G07C 5/08

(54) **Système de gestion des données d'un aéronef.**
Vorrichtung zur Verarbeitung von Daten eines Flugzeugs
System for managing data of an aircraft

(30) Priorité: 23.11.2012 FR 1203153
(43) Date de publication de la demande: 28.05.2014
(73) Titulaire: THALES, 92400 Courbevoie (FR)
(72) Inventeur: Huynh, Rémi, 31036 Toulouse Cedex 1 (FR); Peyrat, Stéphanie, 31300 Toulouse (FR); Fournier, François, 31120 Roques Sur Garonne (FR)
(74) Mandataire: Priori, Enrico

(56) Documents cités:
- US-A1- 2008 126 111
- US-A1- 2009 265 393

## Description

La présente invention concerne un système de gestion, de diffusion et de synchronisation des données associées à un aéronef civil ou militaire. Ces données sont généralement des données générales du vol (origine du vol, destination du vol, horaires du vol...), des données de maintenance (défauts ayant été détectés, pannes que l'aéronef a eues, alertes, réparations qu'a subies l'aéronef, logiciels téléchargés dans l'aéronef...). Ces données concernent aussi les données relatives à la prise en charge de l'aéronef en escale, (quantité de kérosène embarqué, dégivrage des différents éléments de l'aéronef ...), les données de gestion du vol (en particulier le plan de vol, les cartes chargées dans l'aéronef), ou encore les données relatives à la cabine (en particulier les détails sur les passagers et les données à destination des passagers via l'équipement de cabine en particulier les caractéristiques des données vidéo et internet).

Il est connu dans l'état de la technique, des équipements informatiques qui sont capables de traiter une partie de ces données. Il existe en particulier un équipement connu sous le nom anglais de Electronic Flight Bag (EFB) ou sac électronique de vol en français, qui permet au pilote d'avoir accès à une partie de ces données. Il existe aussi un équipement connu sous le nom anglais de Portable Maintenance Access Terminal (PMAT) ou terminal d'accès de maintenance portable, qui permet aux opérateurs de maintenance, aux opérateurs de cabine ou aux opérateurs de piste d'effectuer la maintenance de l'aéronef. Cependant les systèmes actuels posent un problème de synchronisation et de mise à jour des données. En particulier, il n'existe pas de synchronisation unifiée entre les données stockées à bord de l'aéronef et les données stockées au sol ni de partage d'information entre les différents équipements. En effet, selon les phases d'utilisation de l'aéronef les données peuvent être traitées par des utilisateurs présents à bord de l'aéronef, des utilisateurs présents au sol à proximité de l'aéronef ou encore des utilisateurs présents au sol dans des centres de contrôle.

Le document de l'art technique US2008/0126111 est également relevant.

La présente invention vise donc à remédier à ces problèmes en proposant un système de gestion, de diffusion et de synchronisation de l'ensemble des données, donnant aux utilisateurs un accès aux données les plus à jour possible quelle que soit la phase d'utilisation de l'aéronef.

Ainsi il est proposé, selon un aspect de l'invention un système de gestion des données d'un aéronef comportant un premier dispositif de stockage de données représentatives de paramètres de fonctionnement de l'aéronef, le premier dispositif étant situé au sol. Le système comporte aussi un deuxième dispositif de stockage de données représentatives de paramètres de l'aéronef, le deuxième dispositif étant embarqué à bord de l'aéronef et un dispositif d'accès aux données contenues dans le premier et deuxième dispositif de stockage. Le système comporte également un dispositif de détermination de l'arrêt au sol dudit aéronef, un dispositif de synchronisation des données contenues dans les premiers et le deuxième dispositif de stockage, en fonction des informations du dispositif de détermination. De plus le dispositif d'accès est en outre adapté pour sélectionner le premier dispositif de stockage ou le deuxième dispositif de stockage pour accéder aux données, en fonction des informations du dispositif de détermination.

La présence d'un dispositif de synchronisation implique un échange bidirectionnel entre le premier dispositif et le deuxième dispositif de stockage.

Dans certains cas les deux bases ne sont pas synchronisées en permanence du fait de rupture de connectivité car :
- l'aéroport où se trouve l'aéronef n'est pas forcément équipé de connectivité, ou bien les réseaux publics à l'aéroport peuvent être saturées,
- certains aéronefs ne sont pas équipés de moyen de connectivité en vol,
- la connectivité en vol n'est pas disponible dans certaines zones,
- le coût de communication dans certaines zones n'est parfois pas acceptable pour la synchronisation de certaines données.

Dans ce cas il est donc nécessaire de sélectionner la base (sol ou embarquée dans l'aéronef) sur laquelle l'opérateur va travailler, en fonction d'un contexte qui inclus :
- le fait que l'aéronef soit au sol ou en vol (ceci est déterminé en se basant en particulier sur la compression du train d'atterrissage, l'ouverture ou non d'une porte ou bien le fait d'avoir le frein de parking de l'aéronef activé),
- la géolocalisation de l'aéronef,
- la politique de communication de la compagnie aérienne en fonction de la position de l'aéronef et des accords avec les opérateurs de télécommunications,
- la phase de vol,
- la disponibilité des moyens de communications et
- l'état de synchronisation des deux bases.

Avantageusement ledit dispositif d'accès est adapté pour sélectionner ledit premier dispositif de stockage si :
- ledit aéronef est au sol et
- ledit premier dispositif et ledit deuxième dispositif de stockage sont reliés entre eux et
- ledit premier dispositif et ledit deuxième dispositif de stockage ont été synchronisés.

Avantageusement ledit dispositif d'accès est adapté pour sélectionner ledit deuxième dispositif de stockage si :
- ledit aéronef est en vol ou
- ledit premier dispositif et ledit deuxième dispositif de stockage ne sont pas reliés entre eux ou
- ledit premier dispositif et ledit deuxième dispositif de stockage n'ont pas été synchronisés.

Avantageusement le dispositif de détermination est adapté pour faire cette détermination à partir d'une information représentative d'une compression d'un train d'atterrissage et/ou d'une activation/désactivation d'un frein de parking de l'aéronef et/ou d'une ouverture/fermeture d'une porte de l'aéronef.

Avantageusement l'aéronef est considéré comme étant à l'arrêt au sol par le dispositif de détermination si l'une des conditions suivante est remplie :
un train est compressé depuis un temps donné
un train est compressé et un frein de parking est activé
un train est compressé et une porte est ouverte
un frein de parking est activé et une porte est ouverte.

Selon une caractéristique technique le dispositif d'accès comprend une interface de type services web.

Une interface de type service web est une interface permettant la communication et l'échange de données entre applications et systèmes hétérogènes dans des environnements distribués. Il s'agit donc d'un ensemble de fonctionnalités partageant des données via un réseau informatique, par et pour des applications ou machines, sans intervention humaine, et de manière synchrone.

Ces interfaces de type service Web permettent donc de relier entre eux des matériels hétérogènes (par exemple EFB, PMAT, ordinateur générique, tablettes et smartphones génériques).

Avantageusement le système comporte un dispositif de gestion de l'autorisation d'accès aux données contenues dans le premier dispositif de stockage ou le deuxième dispositif de stockage

Avantageusement le dispositif d'accès étant en outre adapté pour authentifier un utilisateur accédant aux données.

L'invention sera mieux comprise et d'autres avantages apparaîtront à la lecture de la description détaillée faite à titre d'exemple non limitatif et à l'aide des figures parmi lesquelles :
- la figure 1 présente le système selon un premier aspect de l'invention
- la figure 2 présente le système selon un deuxième aspect de l'invention

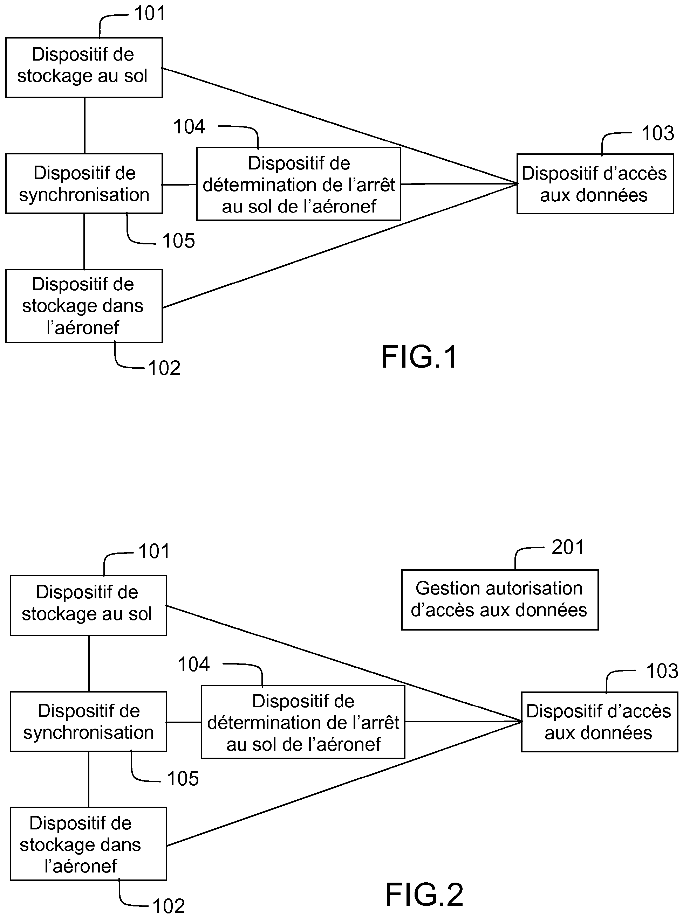

Le système tel que présenté figure 1 comporte donc un premier dispositif de stockage de données embarqué dans l'aéronef 101 et un deuxième dispositif de stockage de données au sol 102. Ces dispositifs de stockage sont par exemple des serveurs présents dans les centres de contrôle d'une compagnie aérienne ou bien des centres de données présents chez un fournisseur de la compagnie aérienne. Les dispositifs embarqués concentrent uniquement les informations d'un aéronef alors que les dispositifs au sol concentrent les informations d'un ensemble d'aéronefs. Ces informations susceptibles d'être stockées comprennent par exemple :
- la prise en charge de l'aéronef en escale, (quantité de kérosène embarqué, dégivrage des différents éléments de l'aéronef...)
- les données de gestion du vol (en particulier le plan de vol, les cartes chargées dans l'aéronef),
- les données relatives à la cabine (en particulier les détails sur les passagers et les données à destination des passagers via l'équipement de cabine en particulier les caractéristiques des données vidéo et internet).
- les données relatives aux pilotes (plans de vol, cartes, calcul de performance...)

Le système comporte aussi un dispositif 103 permettant l'accès aux données contenues dans le premier ou le deuxième dispositif de stockage. Le choix de l'accès au premier ou deuxième dispositif de stockage est réalisé en fonction des informations en provenance du dispositif 104 de détermination de l'arrêt au sol de l'aéronef.

Ainsi, lorsque l'aéronef est en vol, l'accès aux données est réalisé directement via le premier dispositif de stockage embarqué dans l'aéronef.

Lorsque l'aéronef est au sol (événement détecté via le dispositif de détermination 104), l'accès aux données est réalisé via le deuxième dispositif de stockage au sol.

Différents types de terminaux peuvent accéder aux données via le dispositif d'accès. Ces terminaux utilisent un environnement de type client-serveur. L'environnement client-serveur désigne un mode de communication à travers un réseau entre plusieurs programmes ou logiciels : l'un, qualifié de client, envoie des requêtes ; l'autre ou les autres, qualifiés de serveurs, attendent les requêtes des clients et y répondent. Dans le cadre de cette invention des clients hétérogènes (par exemple EFB, PMAT, ordinateur générique, tablettes et smartphones génériques) sont utilisés par les pilotes, les opérateurs de maintenance, les personnels de cabine ou les personnels en charge de la maintenance. Ces équipements peuvent utiliser différents systèmes d'exploitations par exemple Windows, iOS ou Android. Ces différents terminaux peuvent appartenir à la compagnie aérienne en charge de l'exploitation de l'aéronef, à une autre compagnie aérienne ou à un sous-traitant de la compagnie aérienne. L'interface entre ces terminaux et le dispositif d'accès peut utiliser une interface de programmation applicative ouverte, basée par exemple sur une technologie de type services web. Ces services web permettent un échange de données informatisé. De plus cet accès aux données est réalisé de manière sécurisée en particulier par l'authentification de l'utilisateur.

Le système comporte enfin un dispositif de synchronisation 105 qui permet la synchronisation entre les données contenues dans le premier dispositif de stockage et les données contenues dans le deuxième dispositif de stockage. Cette synchronisation est effectuée en fonction des informations en provenance du dispositif de détermination 104 de l'arrêt au sol d'un aéronef.

Dans un mode de réalisation le dispositif de détermination de l'arrêt au sol de l'aéronef réalise cette détermination à partir de la connaissance de la compression du train d'atterrissage, de l'activation/désactivation du frein de parking et/ou de l'ouverte/fermeture de la ou les portes de la carlingue.

En fonction de ces différents paramètres plusieurs règles peuvent exister pour déterminer si l'aéronef est à l'arrêt au sol. Par exemple, il est possible de considérer que ;
- si le train est compressé depuis un temps donné
- si le train est compressé et le frein de parking est activé
- si le train est compressé et la porte est ouverte
- si le frein de parking est activé et la porte est ouverte
alors l'aéronef est au sol.

Le dispositif 103 permettant l'accès aux données utilise les données contenues dans le premier dispositif de stockage ou le deuxième dispositif de stockage en fonction de différentes règles suivantes. En particulier on considère que le dispositif 103 d'accès aux données utilise le premier dispositif de stockage embarqué dans l'aéronef dans le cas où :
- l'aéronef est en vol,
- si la connexion avec le deuxième dispositif de stockage au sol n'est pas disponible ou
- si le premier dispositif de stockage dans l'aéronef et le deuxième dispositif de stockage au sol n'ont pas été synchronisés.
On considère que le dispositif 103 d'accès aux données utilise le deuxième dispositif de stockage au sol dans le cas où :
- l'aéronef est au sol et que la connexion entre le premier dispositif et le deuxième dispositif de stockage est réalisée
- et uniquement si le premier dispositif et le deuxième dispositif de stockage ont été synchronisés.

Le dispositif 105 de synchronisation utilise également les informations fournies par le dispositif 104 de détermination de l'arrêt au sol de l'aéronef. Ainsi la synchronisation est réalisée lorsque l'aéronef est à l'arrêt au sol et lorsque la connexion entre le premier dispositif de stockage dans l'aéronef et le deuxième dispositif de stockage au sol est réalisée.

La figure 2 présente l'invention dans un mode de réalisation dans lequel elle comporte en outre un dispositif 201 de gestion de l'autorisation d'accès aux données.

Ce dispositif de gestion de l'autorisation est placé au sol et est relié avec le deuxième dispositif de stockage de données au sol. Cette liaison permet au dispositif de gestion de l'autorisation d'indiquer au deuxième dispositif de stockage de données au sol les données auxquelles chaque utilisateur a le droit d'accéder. Afin d'effectuer les échanges de données un chiffrement des données, une architecture de type clé publique ou un environnement sécurisé pour applications mobiles peut être utilisés.

Dans un mode de réalisation les différents dispositifs sont localisés aux endroits suivants :
- le premier dispositif de stockage 101 : Dans un batiment de la compagnie aérienne ou dans un batiment du fournisseur de la solution ou dans le centre de donnée ou data center en anglais d'un prestataire de service tiers,
- le deuxième dispositif de stockage 102 : Dans le cockpit ou dans la baie avionique,
- le dispositif d'accès aux données 103 : Dans le cockpit, dans la cabine, autour de l'aéronef ou dans un batiment de la compagnie aérienne ou dans un batiment du fournisseur de la solution ou dans un lieu quelconque avec connection à internet,
- le dispositif de détermination de l'arrêt au sol 104 : Dans le cockpit ou dans la baie avionique,
- le dispositif de synchronisation 105 : Dans le cockpit ou dans la baie avionique,
- le dispositif de gestion de l'autorisation d'accès aux données 201 : Dans un batiment de la compagnie aérienne ou dans un batiment du fournisseur de la solution ou dans un lieu quelconque avec connection à internet.

## Revendications

1. Système de gestion des données d'un aéronef comportant ;
- un premier dispositif de stockage (101) de données représentatives de paramètres de fonctionnement dudit aéronef, ledit premier dispositif étant situé au sol
- un deuxième dispositif de stockage de données représentatives de paramètres dudit aéronef, ledit deuxième dispositif étant embarqué à bord dudit aéronef
- un dispositif d'accès aux données contenues dans lesdits premier et deuxième dispositifs de stockage
ledit système étant **caractérisé en ce qu'**il comporte également ;
- un dispositif de détermination (104) de l'arrêt au sol dudit aéronef
- un dispositif de synchronisation (105) des données contenues dans ledit premier dispositif et ledit deuxième dispositif de stockage, en fonction d'informations dudit dispositif de détermination ;
ledit dispositif d'accès étant en outre adapté pour :
- sélectionner ledit premier dispositif de stockage ou ledit deuxième dispositif de stockage pour accéder aux données, en fonction desdites informations dudit dispositif de détermination.

2. Système selon la revendication 1 dans lequel ledit dispositif d'accès est adapté pour sélectionner ledit premier dispositif de stockage si :
• ledit aéronef est au sol et
• ledit premier dispositif et ledit deuxième dispositif de stockage sont reliés entre eux et
• si ledit premier dispositif et ledit deuxième dispositif de stockage ont été synchronisés.

3. Système selon la revendication 1 ou 2 dans lequel ledit dispositif d'accès est adapté pour sélectionner ledit deuxième dispositif de stockage si :
• ledit aéronef est en vol ou
• ledit premier dispositif et ledit deuxième dispositif de stockage ne sont pas reliés entre eux ou
• si ledit premier dispositif et ledit deuxième dispositif de stockage n'ont pas été synchronisés.

4. Système selon l'une des revendications 1 à 3 dans lequel ledit dispositif de détermination (104) est adapté pour faire cette détermination à partir d'une information représentative d'une compression d'un train d'atterrissage et/ou d'une activation/désactivation d'un frein de parking dudit aéronef et/ou d'une ouverture/fermeture d'une porte dudit aéronef.

5. Système selon l'une des revendications 1 à 4 dans lequel ledit aéronef est considéré comme étant à l'arrêt au sol par ledit dispositif de détermination (104) si l'une des conditions suivante est remplie :
un train est compressé depuis un temps donné,
un train est compressé et un frein de parking est activé,
un train est compressé et une porte est ouverte,
un frein de parking est activé et une porte est ouverte.

6. Système selon l'une des revendication 1 à 5 dans lequel ledit dispositif d'accès comprend une interface de type services web.

7. Système selon l'une des revendications 1 à 6 comportant en outre un dispositif de gestion 201 d'une autorisation d'accès aux données contenues dans ledit premier dispositif de stockage ou deuxième dispositif de stockage

8. Système selon l'une des revendications précédentes dans lequel ledit dispositif d'accès étant en outre adapté pour authentifier un utilisateur accédant aux données.

## Patentansprüche

1. System zum Verwalten von Daten eines Flugzeugs, Folgendes beinhaltend;
- eine erste Vorrichtung zum Speichern (101) von Daten, welche Funktionsparameter des Flugzeugs darstellen, wobei die erste Vorrichtung am Boden befindlich ist,
- eine zweite Vorrichtung zum Speichern von Daten, welche Parameter des Flugzeugs darstellen, wobei die zweite Vorrichtung an Bord des Flugzeugs mitgeführt wird,
- eine Vorrichtung zum Zugriff auf Daten, welche in der ersten und der zweiten Speichervorrichtung enthalten sind,
wobei das System **dadurch gekennzeichnet ist, dass** es zudem Folgendes beinhaltet:
- eine Vorrichtung zum Bestimmen (104) des Stillstandes am Boden des Flugzeugs
- eine Vorrichtung zum Synchronisieren (105) der in der ersten Vorrichtung und der zweiten Vorrichtung zum Speichern enthaltenen Daten, anhand von Informationen der Bestimmungsvorrichtung;
wobei die Zugriffsvorrichtung zudem geeignet ist zum:
- Selektieren der ersten Speichervorrichtung oder der zweiten Speichervorrichtung zum Zugriff auf die Daten, anhand der Informationen der Bestimmungsvorrichtung.

2. System nach Anspruch 1, bei welchem die Zugriffsvorrichtung zum Selektieren der ersten Speichervorrichtung geeignet ist, wenn:
• das Flugzeug am Boden ist und
• die erste Vorrichtung und die zweite Vorrichtung zum Speichern miteinander verbunden sind, und
• wenn die erste Vorrichtung und die zweite Vorrichtung zum Speichern synchronisiert wurden.

3. System nach Anspruch 1 oder 2, bei welchem die Zugriffsvorrichtung zum Selektieren der zweiten Speichervorrichtung geeignet ist, wenn:
• das Flugzeug fliegt oder
• die erste Vorrichtung und die zweite Vorrichtung zum Speichern nicht miteinander verbunden sind oder
• wenn die erste Vorrichtung und die zweite Vorrichtung zum Speichern nicht synchronisiert wurden.

4. System nach einem der Ansprüche 1 bis 3, bei welchem die Bestimmungsvorrichtung (104) geeignet ist, um diese Bestimmung anhand einer Information vorzunehmen, welche eine Kompression eines Fahrwerks und/oder eine Aktivierung/Deaktivierung einer Feststellbremse des Flugzeugs und/oder eine Öffnung/Schließung einer Tür des Flugzeugs darstellt.

5. System nach einem der Ansprüche 1 bis 4, bei welchem das Flugzeug durch die Bestimmungsvorrichtung (1041) als in Stillstand am Boden befindlich betrachtet wird, wenn eine der folgenden Bedingungen erfüllt ist:
- ein Fahrwerk seit einer gegebenen Zeit komprimiert ist,
- ein Fahrwerk komprimiert und eine Feststellbremse aktiviert ist,
- ein Fahrwerk komprimiert und eine Tür geöffnet ist,
- eine Feststellbremse aktiviert und eine Tür geöffnet ist.

6. System nach einem der Ansprüche 1 bis 5, bei welchem die Zugriffsvorrichtung eine Schnittstelle vom Typ Web-Dienste beinhaltet.

7. System nach einem der Ansprüche 1 bis 6, welches zudem eine Vorrichtung zum Verwalten (201) einer Zugriffsgenehmigung zu Daten beinhaltet, welche in der ersten Speichervorrichtung oder in der zweiten Speichervorrichtung enthalten sind.

8. System nach einem der vorhergehenden Ansprüche, bei welchem die Zugriffsvorrichtung zudem geeignet ist, um einen auf die Daten zugreifenden Benutzer zu authentifizieren.

## Claims

1. Aircraft data management system comprising:
- a first storage device (101) for data representative of operating parameters of said aircraft, said first device being situated on the ground,
- a second storage device for data representative of parameters of said aircraft, said second device being embedded onboard said aircraft,
- a device for accessing the data contained in said first and second storage devices,
said system being **characterized in that** it also comprises:
- a device (104) for determining the stopping of said aircraft on the ground,
- a device (105) for synchronizing the data contained in said first and second storage devices, according to information from said determination device;
said access device also being designed to:
- select said first storage device or said second storage device to access the data, according to said information from said determination device.

2. System according to claim 1, in which said access device is designed to select said first storage device if:
• said aircraft is on the ground and
• said first and second storage devices are linked together and
• if said first and second storage devices have been synchronized.

3. System according to claim 1 or 2, in which said access device is designed to select said second storage device if:
• said aircraft is in flight or
• said first and second storage devices are not linked together or
• if said first and second storage devices have not been synchronized.

4. System according to one of claims 1 to 3, in which said determination device (104) is designed to make this determination from information representative of a compression of a landing gear and/or of an activation/deactivation of a parking brake of said aircraft and/or of an opening/closing of a door of said aircraft.

5. System according to one of claims 1 to 4, in which said aircraft is considered to be stopped on the ground by said determination device (104) if one of the following conditions is fulfilled:
a landing gear has been compressed for a given time,
a landing gear is compressed and a parking brake is activated,
a landing gear is compressed and a door is open,
a parking brake is activated and a door is open.

6. System according to one of claims 1 to 5, in which said access device comprises an interface of web services type.

7. System according to one of claims 1 to 6, also comprising a device (201) for managing an authorization to access the data contained in said first storage device or second storage device.

8. System according to one of the preceding claims, in which said access device also being designed to authenticate a user accessing the data.
